# EUROPÄISCHE PATENTSCHRIFT

(11) **EP 1 403 595 B1**
(45) Veröffentlichungstag und Bekanntmachung des Hinweises auf die Patenterteilung: **16.03.2011**
(21) Anmeldenummer: 03020691.6
(22) Anmeldetag: 11.09.2003
(51) Int. Cl.: F24J 2/07, F24J 2/06

(54) **Absorberelement für solare Hochtemperatur-Wärmegewinnung und Verfahren zu dessen Herstellung**
Absorber element for high temperature solar heat recovery and process for manufacturing same
Elément absorbeur pour récupération de chaleur solaire à haute température et son procédé de fabrication

(30) Priorität: 25.09.2002 DE 20214823 U
(43) Veröffentlichungstag der Anmeldung: 31.03.2004
(73) Patentinhaber: Besier, Dirk, 65199 Wiesbaden (DE)
(72) Erfinder: Besier, Dirk, 65199 Wiesbaden (DE)
(74) Vertreter: Strehl Schübel-Hopf & Partner

(56) Entgegenhaltungen:
- EP-A- 0 083 548
- DE-A1- 2 738 667
- FR-A- 1 010 525
- FR-A- 2 458 768
- US-A- 1 661 473
- US-A- 3 987 780
- US-A- 4 280 327

## Beschreibung

Die Erfindung betrifft ein Absorberelement für die solare Hochtemperatur-Wärmegewinnung der im Oberbegriff des Patentanspruchs 1 genannten Art. Solche Absorberelemente sind allgemein bekannt. Die Erfindung betrifft außerdem ein Verfahren zur Herstellung eines solchen Absorberelements.

In solarthermischen Kraftwerken wird die Strahlungsenergie der Sonne mit Hilfe von Spiegelsystemen, vorzugsweise mit Nachführung, konzentriert und zur Erhitzung eines Wärmeträgermediums verwendet. Bei einer allgemein bekannten Konstruktion fließt das Wärmeträgermedium durch lange Absorberrohre, die im Fokus von Pärabol-Rinnenkollektoren angeordnet sind.

Die Konzentration der Strahlungsenergie kann statt in reflektierenden auch in brechenden Systemen (Sammellinsen) erfolgen. Ein Beispiel für ein solches linear optisch konzentrierendes System ist der US-Patentschrift 4 287 881 vom 8. September 1981 zu entnehmen.

Solarkollektoren, bei denen der eigentliche Absorber von Elementen umgeben ist, die Strahlung auf diesen zurück reflektieren, sind zum Beispiel aus der FR-Patentschrift 555 420, den US-Patentschriften 4 300 538, 4 440 155, 4 512 335 und den DE-Veröffentlichungen 27 38 667, 27 57 155 und 30 20 310 bekannt.

Ein Problem bei der solaren Hochtemperatur-Wärmegewinnung sind die Wärmeverluste aufgrund der Abstrahlung vom Absorberrohr. Diese Wärmeverluste sind wegen der hohen Temperatur erheblich. Zur Verminderung der Wärmeverluste ist es allgemein bekannt, das eigentliche Absorberrohr in einem Außenrohr anzuordnen; dadurch werden die Wärmeverluste zwar verringert, sind aber immer noch so hoch, daß der Wirkungsgrad bei der solaren Hochtemperatur-Wärmegewinnung weit unter dem theoretisch erreichbaren Wert bleibt.

Aufgabe der Erfindung ist es daher, ein Absorberelement für die solare Hochtemperatur-Wärmegewinnung zu schaffen, bei dem die Wärmeverluste minimal sind. Auch soll ein einfaches Herstellungsverfahren für ein solches Absorberelement geschaffen werden.

Diese Aufgabe wird erfindungsgemäß mit dem im Patentanspruch 1 beschriebenen Absorberelement gelöst. Vorteilhafte Ausgestaltungen des erfindungsgemäßen Absorberelements sind in den Unteransprüchen genannt. Im Patentanspruch 13 ist ein bevorzugtes Herstellungsverfahren für das Absorberelement beschrieben.

Der erfindungsgemäß um den Absorber angeordnete Reflektorkanal reflektiert die vom Absorber abgestrahlte, langwellige Wärmestrahlung auf diesen zurück und minimiert damit den Wärmeverlust durch Strahlung.

Vorzugsweise besteht der Reflektorkanal zumindest auf der zum Absorber zeigenden Innenseite aus einigen wenigen, im wesentlichen ebenen Flächen. Die vom Absorber in einem Winkelbereich von etwa 180° emittierte Wärmestrahlung wird von den geraden Reflektorkanalwänden zu einem großen Teil direkt auf den Absorber zurück reflektiert und geht nicht durch Mehrfachreflexion an gekrümmten Reflektorkanalwänden verloren.

Der Öffnungsspalt des Reflektorkanals verläuft in der Brennlinie der Lichtbündelungseinheit. Die Brennlinie liegt in der Mittelachse des Außenrohrs. Da die Sonnenstrahlen von der Lichtbündelungseinheit auf die Mittelachse des Außenrohrs fokussiert werden, treffen sie senkrecht auf das Außenrohr und werden an diesem nicht gebrochen. Der Absorber mit dem Absorberrohr und den gekrümmten Absorberplatten kann daher stationär bzw. fest montiert sein. Die nach der Mittelachse divergierenden Sonnenstrahlen fallen vollständig in den Absorberkanal, der vom Absorberrohr und den Absorberplatten gebildet wird. Auf die Wand des Reflektorkanals, der zur Reflexion von Wärmestrahlen vom Absorber optimiert ist, fällt daher kein Sonnenlicht.

Die Sonnenstrahlen erwärmen somit das Wärmeträgermedium im Absorberrohr effektiv, zum Beispiel zur Erzeugung von Dampf. Die kompakte Form des erfindungsgemäßen Absorberelements ermöglicht die verlustarme Erzeugung von Hochtemperaturdampf in kleinen Baueinheiten. Auch in sonnenärmeren Regionen wird damit der Einsatz kleiner Einheiten zur Hochtemperatur-Wärmegewinnung technisch und wirtschaftlich interessant. Der Dampf kann mit gutem Wirkungsgrad in einem Kreisprozeß zur Stromerzeugung verwendet werden. Auch zur Beheizung läßt sich dann Sonnenenergie auf hohem Temperaturniveau sogar im Winter nutzen.

Mit dem erfindungsgemäßen Herstellungsverfahren läßt sich unter Ausgleich der Fertigungs- und Montagetoleranzen der Lichtbündelungseinheit ein minimaler Öffnungsspalt im Reflektorkanal erhalten. Dadurch entsteht eine Spaltgeometrie, die an die jeweilige Konstruktion optimal angepaßt ist. Der Fertigungsaufwand für die Lichtbündelungseinheit und die Absorbereinheit wird reduziert, und die thermischen Verluste im Betrieb werden minimiert.

Ausführungsformen der Erfindung werden im folgenden anhand der Zeichnung beispielhaft näher erläutert. Es zeigen:
Fig. 1 den Querschnitt durch ein Absorberelement;
Fig. 2 das Absorberelement in einer Anordnung mit Rinnenreflektoren;
Fig. 3 das Absorberelement in einer Anordnung mit Sammellinsen.

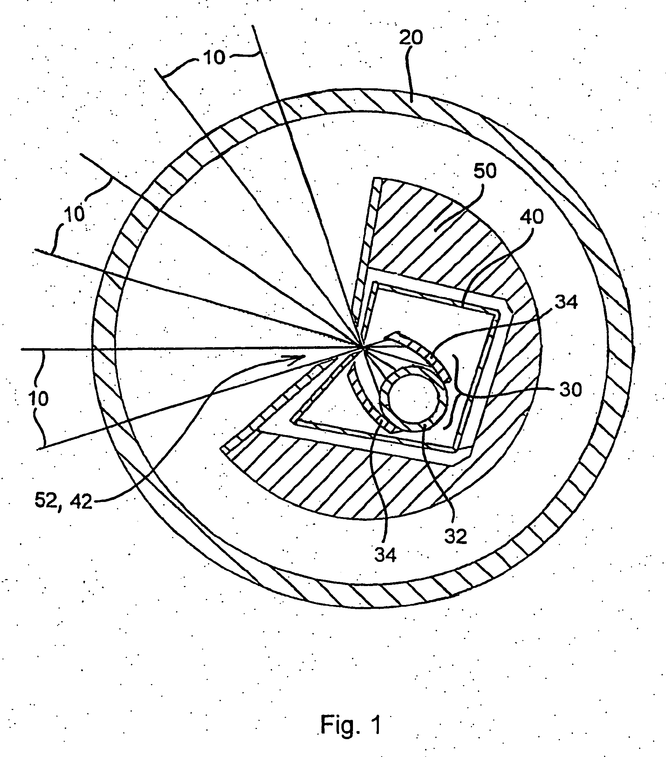

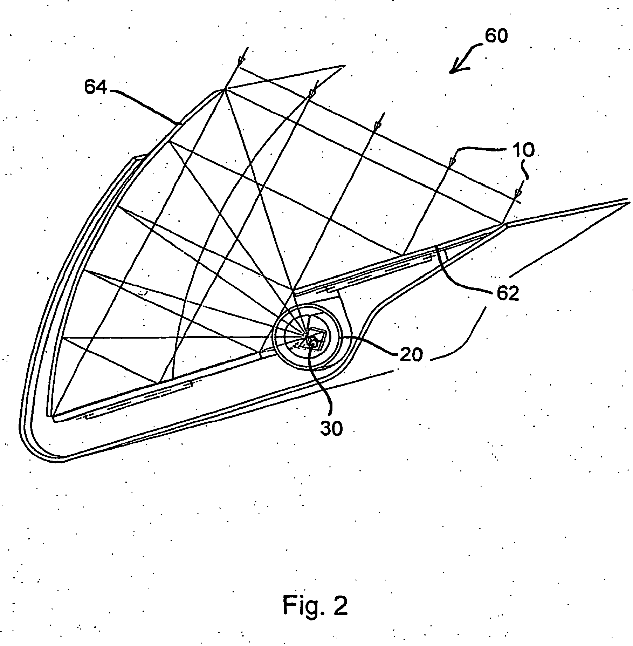

Die Fig. 1 zeigt den Querschnitt durch ein Absorberelement für die solare Hochtemperatur-Wärmegewinnung. Die von der Sonne kommenden Sonnenstrahlen 10 werden durch eine (in Fig. 2 gezeigte) lineare Lichtbündelungseinheit 60 in die Mittellinie eines Außenrohrs 20 fokussiert. Die Mittellinie des Außenrohrs 20 fällt somit mit der Brennlinie der linearen Lichtbündelungseinheit zusammen. Das Außenrohr 20 besteht vorzugsweise aus Glas. Generell besteht das Außenrohr 20 aus einem lichtdurchlässigen Material, das für kurzwellige Strahlung gut durchlässig und für langwellige Wärmestrahlung nicht gut durchlässig ist. Glas erfüllt diese Anforderungen.

Im Inneren des Außenrohrs 20 herrscht ein Vakuum. Die hinter der Brennlinie wieder divergierenden Strahlen treffen dort auf einen zur Mittelachse des Außenrohrs 20 exzentrisch angeordneten Absorber 30. Der Absorber 30 weist auf der bestrahlten Seite ein großes Absorptionsvermögen auf und auf der entgegengesetzten Seite ein geringes Emissionsvermögen, um viel Sonnenstrahlung zu absorbieren und wenig Wärmestrahlung abzugeben.

Der Absorber 30 ist fest im Außenrohr 20 angeordnet. Der Absorber 30 besteht aus einem Absorberrohr 32, in dem ein Wärmeträgermedium umläuft, und am Absorberrohr 32 angebrachten Absorberblechen oder Absorberplatten 34. Vorzugsweise sind die Absorberbleche bzw. Absorberplatten 34 am Absorberrohr 32 angeschweißt, um einen guten Wärmeübergang von den Absorberplatten 34 zum Absorberrohr 32 zu gewährleisten. Die Absorberplatten 34 sind so gekrümmt, daß sie die einfallenden Sonnenstrahlen 10 nahezu vollständig aufnehmen und absorbieren. Der hohe Absorptionsgrad wird durch mehrfache Reflexions- und Absorptionsvorgänge von schräg einfallenden Sonnenstrahlen 10 entlang der gekrümmten Oberfläche an der Innenseite der Absorberplatten 34 erreicht.

Der Absorber 30 ist von einem Reflektorkanal 40 umschlossen, der die Wärmestrahlung, die vom Absorber 30 ausgeht, auf diesen zurückreflektiert. Die Oberfläche des Reflektorkanals 40 hat ein geringes Emissions- und Absorptionsvermögen. Der Reflektorkanal 40 weist an der Brennlinie einen Öffnungsspalt 42 auf, durch den die Sonnenstrahlen 10 in den Kanal 40 eintreten. Da die Brennlinie im Öffnungsspalt 42 verläuft, kann der Öffnungsspalt 42 schmal sein. Die Wärmeverluste durch den Öffnungsspalt 42 sind daher gering. Abgesehen vom Öffnungsspalt 42 ist der Reflektorkanal 40 allseits geschlossen.

Auf der zum Absorber 30 zeigenden Innenseite besteht der Reflektorkanal 40 aus einigen wenigen, im wesentlichen ebenen Flächen, um eine möglichst unmittelbare Rückreflexion der vom Absorber 30 ausgehenden Wärmestrahlung zu erhalten. Der Reflektorkanal 40 stellt damit im Querschnitt, wie er in der Fig. 1 zu sehen ist, ein rechteckiges oder trapezförmiges Gebilde dar, wobei die Seite des Reflektorkanals 40, in der die Brennlinie verläuft, für einen optimalen Strahlungsverlauf an eben dieser Brennlinie, das heißt am Öffnungsspalt 42, nach innen zum Absorber 30 hin leicht abgeknickt sein kann.

Der Reflektorkanal 40 besteht damit an seiner Innenseite mit dieser Abknickung aus fünf im wesentlichen ebenen Flächen und ohne Abknickung aus vier solchen Flächen.

Vorzugsweise wird der Reflektorkanal 40 koaxial von einem weiteren, äußeren Reflektorkanal 50 umschlossen, der die gleichen Oberflächeneigenschaften besitzt wie der innere Reflektorkanal 40 und der mit diesem an wenigen Stellen durch schlecht wärmeleitende Elemente etwa aus Keramik formschlüssig verbunden ist. Auf der Seite des Lichteinfalls weist der äußere Reflektorkanal 50 einen Öffnungsspalt 52 auf, der parallel zum Öffnungsspalt 42 des inneren Reflektorkanals 40 verläuft und etwas breiter ist als dieser, um die Sonnenstrahlen 10 nicht zu blokkieren.

Für das Innere des äußeren Reflektorkanals 50 gilt das gleiche wie für den inneren Reflektorkanal 40, das heißt die zum Absorber 30 zeigende Innenseite auch des äußeren Reflektorkanal 50 wird von einigen wenigen, im wesentlichen ebenen Flächen gebildet. Auf der Außenseite ist der äußere Reflektorkanal 50 jedoch kreisrund. Er ist zusammen mit dem inneren Reflektorkanal 40 um die Mittelachse des Außenrohrs 20 drehbar. Die Reflektorkanäle 40, 50 werden über Magnete, die außerhalb des Außenrohrs 20 angeordnet sind, drehpositioniert, um ihre Lage an den Lichteinfall nach dem Sonnenstand anzupassen. Die Magnete sind an einer Aufnahmekonstruktion befestigt, die drehbar um die Außenrohrachse angeordnet ist. An der Aufnahmekonstruktion ist auch die Lichtbündelungseinheit montiert. Die Drehpositionierung der Aufnahmekonstruktion erfolgt elektromotorisch. Ein mit der Aufnahmekonstruktion mit gedrehter optoelektronischer Sensor steuert die Drehpositionierung zur Nachführung entsprechend der Lichteinfallsrichtung.

Die Reflektorkanäle 40, 50 haben die Funktion, die langwellige Wärmestrahlung, die vom Absorber 30 abgestrahlt wird, auf diesen zurück zu reflektieren und damit den Wärmeverlust durch Strahlung zu minimieren. Galvanisierte Metalloberflächen sind in der Lage, langwellige Strahlung zu einem großen Anteil zu reflektieren. Das Absorberrohr 32 mit den daran befestigen Absorberplatten 34 ist fest im Außenrohr 20 angeordnet und macht die Positionierbewegungen der Reflektorkanäle 40, 50 nicht mit. Die Absorberplatten 34 absorbieren die kurzwellige Sonnenstrahlung und verhindern, daß die Sonnenstrahlung direkt auf den inneren Reflektorkanal 40 trifft und dort absorbiert wird.

Die Fig. 2 zeigt die Anordnung des Außenrohrs 20 mit dem Absorber 30 an einer Lichtbündelungseinheit 60 mit Lamellenumlenkspiegeln 62 und einem Parabolrinnenspiegel 64. Die Spiegel 62, 64 sind um die Achse des Außenrohrs 20 drehbar an einer Aufnahmekonstruktion befestigt. Die Lamellenumlenkspiegel 62 sind in Längsrichtung zum Außenrohr 20 angeordnet und um 90° zum Außenrohr 20 verdreht drehbar gelagert. Sie lenken schräg auftreffende Strahlen so ab, daß sie immer normal zur Einfallsebene des Parabolrinnenspiegels 64 einfallen. Die Strahlen treten dadurch immer senkrecht ohne große Reflexionsverluste durch die Wandung des Außenrohrs 20 in dieses ein. Die Drehpositionierung der Lamellenumlenkspiegel 62 erfolgt elektromotorisch und wird tageszeitabhängig gesteuert.

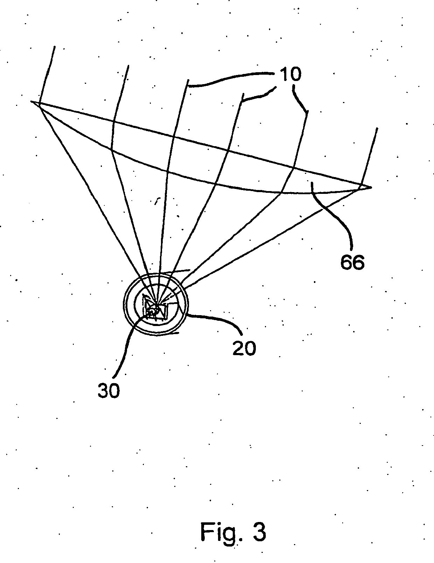

Die Fig. 3 zeigt eine alternative Anordnung des Außenrohrs 20 mit dem Absorber 30 an einer Lichtbündelungseinheit mit einer linearen Sammellinse 66. Die Sammellinse 66 ist drehbar zur Außenrohrachse an einer Aufnahmekonstruktion befestigt. Die Brennlinie der Sammellinse 66 liegt in der Außenrohrachse.

Bei dem beschriebenen Absorberelement liegt der Öffnungsspalt 42, 52 des Reflektorkanals 40 bzw. der Reflektorkanäle 40, 50 in der Brennlinie der Lichtbündelungseinheit 60 und in der Mittelachse des Außenrohrs 20. Da die Sonnenstrahlen von der der Sonne nachgeführten Lichtbündelungseinheit 60 immer auf die Mittelachse des Außenrohrs 20 fokussiert werden, durchdringen sie das Außenrohr 20 senkrecht und werden dort nicht gebrochen. Das Absorberrohr 32 und die thermisch damit verbundenen Absorberplatten 34 bilden einen Absorberkanal, der fest montiert ist. Die nach der Mittelachse wieder divergierenden Sonnenstrahlen fallen vollständig in diesen Absorberkanal. Der Reflektorkanal 40 bzw. die Reflektorkanäle 40, 50 werden bei feststehendem Außenrohr 20 zum Beispiel durch Magnetkräfte von außen mit nachgeführt.

Die beschriebene Anordnung kann zur solaren Hochdruck-Direktverdampfung für die Stromerzeugung in Kleinkraftwerken verwendet werden.

Dazu wird als Wärmeträgermedium Wasser verwendet. Das Wasser wird im Absorberrohr 32 eines als Speisewassererwärmer dienenden Absorberelements erwärmt und in mehreren nachgeschalteten Elementen verdampft und überhitzt, um überhitzten Hochdruckdampf zu erzeugen. Die Elemente sind geodätisch versetzt zueinander angeordnet, so daß sich der überhitzte Dampf in den oberen Elementen ausbreitet. Jeweils mehrere Elemente sind zu einem Modul zusammengesetzt. In der Haltekonstruktion des Moduls sind die drehbaren Elemente untergebracht. Zweckmäßigerweise sind die Absorberrohre aller Elemente gleich lang. Da jedoch für die Verdampfung eine größere Wärmeleistung als für die Speisewassererwärmung erforderlich ist, werden als Verdampfer zwei parallel geschaltete Absorberelemente verwendet, denen über einen Verteiler jeweils ein Teil des erwärmten Speisewassers zugeführt wird. In einem einfachen Fall kann der Verteiler jeweils ein Drosselventil im Zulauf zu den beiden den Verdampfer bildenden Absorberelementen aufweisen, um beiden die gleiche Speisewassermenge zuzuteilen. Wenn diese beiden Absorberelemente auf unterschiedlicher geodätischer Höhe angebracht sind, kann der Verteiler auch einen Überlaufbehälter für das erwärmte Speisewasser aufweisen, der zwei getrennte aber auf gleicher Höhe und über den beiden Absorberrohren des Verdampfers befindliche Überläufe enthält, von denen das Speisewasser entsprechenderweise zu den beiden Absorberrohren hinabströmt. So erhalten beide Absorberrohre trotz ihrer unterschiedlichen geodätischen Höhe die gleiche Speisewassermenge. Der Dampf aus mehreren Modulen wird in einem geschlossenen Kreislauf geführt und in einer Arbeitsmaschine zur Stromerzeugung entspannt. Der entspannte Dampf wird unter Wärmeabgabe an die Umgebung verflüssigt und über eine Speisewasserpumpe an die Module zurückgeführt.

Bei Anlagen mit geringer Leistung kann als Arbeitsmaschine ein Hubkolbenmotor mit Stufenkolben verwendet werden. Ein mehrstufiger Hubkolbenmotor kann sich wechselnden Lastanforderungen gut anpassen. Bei größeren Leistungen können es Dampfturbinen sein, die aber wegen des wechselnden Energiezustroms nicht so dynamisch auf Lastwechsel reagieren.

Das beschriebene Absorberelement läßt sich vorteilhaft dadurch herstellen, daß das Absorberelement komplett zusammengebaut wird, wobei jedoch zumindest die Wand des inneren Reflektorkanals 40 noch keinen Öffnungsspalt 42 aufweist. Dann wird paralleles Laserlicht über die Lichtbündelungseinheit 60 eingestrahlt, das so gebündelt den Öffnungsspalt 42 aus der Wand des Reflektorkanals 40 herausbrennt. Bei diesem Verfahren entsteht ein Öffnungsspalt, bei dem die Fertigungsund Montagetoleranzen der Lichtbündelungseinheit bei reduziertem Fertigungsaufwand berücksichtigt sind. Durch den minimal bemessenen Öffnungsspalt werden die thermischen Verluste minimiert.

Auch der Öffnungsspalt 52 in der Wand des äußeren Reflektorkanals 50 läßt sich so herstellen.

### Bezugszeichenliste

- 10: Sonnenstrahlen
- 20: Außenrohr
- 30: Absorber
- 32: Absorberrohr
- 34: Absorberplatte
- 40: innerer Reflektorkanal
- 42: Öffnungsspalt
- 50: äußerer Reflektorkanal
- 52: Öffnungsspalt
- 60: Lichtbündelungseinheit
- 62: Lamellenumlenkspiegel
- 64: Parabolrinnenspiegel
- 66: Sammellinse

## Patentansprüche

1. Absorberelement für die solare Hochtemperatur-Wärmegewinnung, mit einer Lichtbündelungseinheit (60), einem Außenrohr (20) aus einem lichtdurchlässigen Material und einem darin angeordneten Absorber (30), auf den die Sonnenstrahlen (10) durch die Lichtbündelungseinheit (60) gelenkt werden können, wobei
der Absorber (30) von wenigstens einem Reflektorkanal (40; 50) umgeben ist, und wobei der Reflektorkanal (40; 50) einen Öffnungsspalt (42; 52), durch den die Sonnenstrahlen (10) auf den Absorber (30) fallen können, aufweist, und wobei
der Absorber (30) außerhalb der Mittelachse des Außenrohrs (20) liegt;
**dadurch gekennzeichnet, dass**
die Oberfläche des Reflektorkanals (40; 50) ein geringes Emissions- und Absorptionsvermögen hat und die Wärmestrahlung, die vom Absorber (30) ausgeht, auf diesen zurück reflektieren kann; dass
die Brennlinie der Lichtbündelungseinheit (60) in der Mittelachse des Außenrohrs (20) liegt; dass
der Öffnungsspalt (42; 52) in der Mittelachse des Außenrohrs (20) verläuft, und dass
der Absorber (30) ein Absorberrohr (32), durch das ein Wärmeträgermedium zirkulieren kann, und am Absorberrohr (32) befestigte Absorberplatten (34) umfasst, wobei die Absorberplatten (34) so gekrümmt sind, dass die durch den Öffnungsspalt (42; 52) einfallenden Sonnenstrahlen (10) im Wesentlichen vollständig aufgenommen werden können.

2. Absorberelement nach Anspruch 1, **dadurch gekennzeichnet, daß** die zum Absorber (30) zeigende Innenseite des Reflektorkanals (40; 50) aus einigen wenigen, im wesentlichen ebenen Flächen besteht.

3. Absorberelement nach Anspruch 1, **dadurch gekennzeichnet, daß** koaxial zu einem inneren Reflektorkanal (40) ein diesen umgebender, äußerer Reflektorkanal (50) mit im wesentlichen den gleichen Eigenschaften wie der innere Reflektorkanal (40) vorgesehen ist.

4. Absorberelement nach Anspruch 3, **dadurch gekennzeichnet, daß** der innere und der äußere Reflektorkanal (40, 50) zusammen dem Sonnenlicht nachgeführt werden.

5. Absorberelement nach Anspruch 4, **dadurch gekennzeichnet, daß** der innere und der äußere Reflektorkanal (40, 50) durch Magnete nachgeführt werden, die außerhalb des Außenrohrs (20) an einer Aufnahmekonstruktion befestigt sind.

6. Absorberelement nach Anspruch 1, **dadurch gekennzeichnet, daß** der Absorber (30) mit dem Absorberrohr (32) und den Absorberplatten (34) fest montiert ist und nicht nachgeführt wird.

7. Absorberelement nach Anspruch 1, **dadurch gekennzeichnet, daß** die Lichtbündelungseinheit (60) Lamellenumlenkspiegel (62) und Parabolrinnenspiegel (64) umfaßt.

8. Absorberelement nach Anspruch 1, **dadurch gekennzeichnet, daß** die Lichtbündelungseinheit (60) wenigstens eine lineare Sammellinse (66) umfaßt.

9. Absorberelement nach Anspruch 1, **dadurch gekennzeichnet, daß** das Außenrohr (20) aus Glas besteht.

10. Absorberelement nach Anspruch 1, **dadurch gekennzeichnet, daß** das Wärmeträgermedium Wasser ist.

11. Absorberelement nach Anspruch 10, **dadurch gekennzeichnet, daß** der in solchen Absorberelementen gewonnene Dampf einer Arbeitsmaschine zur Stromerzeugung zugeführt wird.

12. Absorberelement nach Anspruch 11, **dadurch gekennzeichnet, daß** die Arbeitsmaschine ein Hubkolbenmotör mit Stufenkolben ist.

13. Verfahren zur Herstellung eines Absorberelements nach Anspruch 1, **dadurch gekennzeichnet, daß** zuerst das Absorberelement zusammengebaut wird, wobei jedoch zunächst die Wand des Reflektorkanals (40; 50) noch keinen Öffnungsspalt (42; 52) aufweist, und daß dann über die Lichtbündelungseinheit (60) paralleles Laserlicht eingestrahlt wird, das den Öffnungsspalt (42; 52) aus der Wand des Reflektorkanals (40; 50) herausbrennt.

## Claims

1. An absorber unit for solar high temperature heat recovery, comprising a light converging unit (60), an outer tube (20) of light transmissive material and an absorber (30) disposed therein, wherein the solar radiation (10) can be directed by the light converging unit (60) to the absorber, wherein
the absorber (30) is surrounded by at least one reflector channel (40, 50) having an open gap through which the solar radiation (10) can be incident on the absorber (30), and
the absorber (30) is disposed offset from the center axis of the outer tube (20),
**characterised in that**
the surface of the reflector channel (40, 50) is of low emissivity and absorptivity and can reflect heat radiation from the absorber (30) back to the absorber,
a focus line of the light converging unit (60) lies on the center axis of the outer tube (20),
the gap (42, 52) extends along the center axis of the outer tube (20), and
the absorber (30) comprises an absorber tube (32) through which a heat transfer medium can circulate and absorber plates (34) mounted to the absorber tube (32) and curved such that substantially all solar radiation (10) incident through the gap (42, 52) can be received.

2. An absorber unit according to claim 1, **characterised in that** the inner side of the reflector channel (40, 50) facing the absorber (30) consists of several faces which are each substantially flat.

3. An absorber unit in accordance with claim 1, **characterised by** an outer reflector channel (50) coaxially surrounding an inner reflector channel (40) and having substantially the same characteristics as the inner reflector channel (40).

4. An absorber unit in accordance with claim 3, **characterised in that** the inner and outer reflector channels (40, 50) are commonly tracking the solar light.

5. An absorber unit in accordance with claim 4, **characterised in that** the tracking by the inner and outer reflector channels (40, 50) is by means of magnets mounted to a supporting structure outside the outer tube (20).

6. An absorber unit in accordance with claim 1, **characterised in that** the absorber (30) including the absorber tube (32) and absorber plates (34) is fixed without tracking.

7. An absorber unit in accordance with claim 1, **characterised in that** the light converging unit (60) comprises a blade mirror (62) and a parabolic groove mirror (64).

8. An absorber element in accordance with claim 1, **characterised in that** the light converging unit (60) comprises at least one linear converging lens (66).

9. An absorber element in accordance with claim 1, **characterised in that** the outer tube (20) is made of glass.

10. An absorber element in accordance with claim 1, **characterised in that** the heat transfer medium is water.

11. An absorber unit in accordance with claim 10, **characterised in that** steam obtained in such absorber units is fed to an engine for electricity generation.

12. An absorber unit in accordance with claim 11, **characterised in that** the engine is a piston engine having a stepped piston.

13. A method for manufacturing an absorber unit in accordance with claim 1, **characterised in that** the absorber unit is first assembled wherein no gap (42, 52) is yet provided in the wall of the reflector channel (40, 50), and that parallel laser light is then irradiated via the light converging unit (60) for laser-cutting the gap (42, 52) into the wall of the reflector channel (40, 50).

## Revendications

1. Elément absorbeur pour la récupération de chaleur solaire à haute température, comportant une unité de convergence de lumière (60), un tube extérieur (20) constitué d'un matériau laissant passer la lumière, et un absorbeur (30) disposé à l'intérieur de celui-ci, le rayonnement solaire (10) pouvant être dirigé vers ledit absorbeur par l'intermédiaire de l'unité de convergence de lumière (60), dans lequel
l'absorbeur (30) est entouré par au moins un canal réflecteur (40 ; 50), lequel canal réflecteur (40 ; 50) comporte un espace d'ouverture (42 ; 52) à travers lequel le rayonnement solaire (10) peut être dirigé vers l'absorbeur (30), et dans lequel
l'absorbeur (30) est à l'extérieur de l'axe central du tube extérieur (20),
**caractérisé en ce que**
la surface du canal réflecteur (40 ; 50) a une faible émissivité et une faible absorptivité et peut réfléchir en arrière le rayonnement de chaleur provenant de l'absorbeur (30),
la ligne focale de l'unité de convergence de lumière (60) se situe sur l'axe central du tube extérieur (20),
l'espace d'ouverture (42 ; 52) s'étend sur l'axe central du tube extérieur (20), et
l'absorbeur (30) comporte un tube absorbeur (32) à travers lequel un agent de transfert de chaleur peut circuler, et des plaques absorbeuses (34) fixées sur le tube absorbeur (32), les plaques absorbeuses (34) étant incurvées de telle sorte que pratiquement tout le rayonnement solaire (10) incident à travers l'espace d'ouverture (42 ; 52) peut être reçu.

2. Elément absorbeur selon la revendication 1, **caractérisé en ce que** le côté intérieur du canal réflecteur (40 ; 50) dirigé vers l'absorbeur (30) est constitué de quelques faces sensiblement planes.

3. Elément absorbeur selon la revendication 1, **caractérisé en ce qu'**un canal réflecteur extérieur (50) entourant un canal réflecteur intérieur (40) coaxialement à celui-ci est prévu, lequel canal réflecteur extérieur (50) a sensiblement les mêmes caractéristiques que le canal réflecteur intérieur (40).

4. Elément absorbeur selon la revendication 3, **caractérisé en ce que** les canaux réflecteurs intérieur et extérieur (40, 50) suivent conjointement la lumière solaire.

5. Elément absorbeur selon la revendication 4, **caractérisé en ce que** les canaux réflecteurs intérieur et extérieur (40, 50) sont suivis par des aimants qui sont fixés à l'extérieur du tube extérieur (20) sur une structure de réception.

6. Elément absorbeur selon la revendication 1, **caractérisé en ce que** l'absorbeur (30) muni du tube absorbeur (32) et des plaques absorbeuses (34) est fixé sans être suivi.

7. Elément absorbeur selon la revendication 1, **caractérisé en ce que** l'unité de convergence de lumière (60) comporte un miroir de déviation à lame (62) et un miroir rainuré parabolique (64).

8. Elément absorbeur selon la revendication 1, **caractérisé en ce que** l'unité de convergence de lumière (60) comporte au moins une lentille convergente linéaire (66).

9. Elément absorbeur selon la revendication 1, **caractérisé en ce que** le tube extérieur (20) est constitué de verre.

10. Elément absorbeur selon la revendication 1, **caractérisé en ce que** l'agent de transfert de chaleur est l'eau.

11. Elément absorbeur selon la revendication 10, **caractérisé en ce que** la vapeur obtenue dans de tels éléments absorbeurs est acheminée jusqu'à une machine de travail pour la production de courant.

12. Elément absorbeur selon la revendication 11, **caractérisé en ce que** la machine de travail est un moteur à pistons alternatifs comportant des pistons étagés.

13. Procédé pour fabriquer un élément absorbeur selon la revendication 1, **caractérisé en ce que** l'élément absorbeur est d'abord assemblé alors que la paroi du canal réflecteur (40 ; 50) n'a pas encore d'espace d'ouverture (42 ; 52), et qu'une lumière laser parallèle est ensuite injectée par l'intermédiaire de l'unité de convergence de lumière (60) et brûle l'espace d'ouverture (42 ; 52) à l'extérieur de la paroi du canal de réflecteur (40; 50).
